# EUROPEAN PATENT SPECIFICATION

(11) **EP 3 457 861 B1**
(45) Date of publication and mention of the grant of the patent: **29.01.2020**
(21) Application number: 17720836.0
(22) Date of filing: 08.05.2017
(51) Int. Cl.: A23D 7/005, A23D 7/02, A23L 29/219, A23L 29/225, A23L 27/00, A23L 27/60

(54) **OIL-IN-WATER EMULSION CONTAINING WHEAT FLOUR AND PHYSICALLY MODIFIED STARCH**
ÖL-IN-WASSER-EMULSION MIT WEIZENMEHL UND PHYSIKALISCH MODIFIZIERTER STÄRKE
ÉMULSION HUILE DANS EAU CONTENANT DE LA FARINE DE BLÉ ET DE L'AMIDON PHYSIQUEMENT MODIFIÉ

(30) Priority: 17.05.2016 EP 16169908
(43) Date of publication of application: 27.03.2019
(73) Proprietor: Unilever N.V., 3013 AL Rotterdam (NL); Unilever PLC, London, Greater London EC4Y 0DY (GB)
(72) Inventor: SALAZAR, Zaida Maria, 3133 AT Vlaardingen (NL); WOLLER, Jurek, 3133 AT Vlaardingen (NL); ZWETS, Nicole, 3133 AT Vlaardingen (NL)
(74) Representative: Fijnvandraat, Arnoldus
(86) International application number: PCT/EP2017/060861
(87) International publication number: WO 2017/198485

(56) References cited:
- CA-A1- 2 832 259
- GB-A- 808 925
- JP-A- 2010 011 786
- US-A1- 2003 205 167

## Description

### FIELD OF THE INVENTION

The present invention relates to a composition in the form of an oil-in-water emulsion, containing wheat flour and physically modified starch. The invention also relates to a method for preparation of the composition. The invention further relates to the use of wheat flour and physically modified starch to reduce syneresis in an oil-in-water emulsion.

### BACKGROUND TO THE INVENTION

Consumers are becoming more and more interested in natural foods, meaning food products in which the number of ingredients that can be perceived to be artificial has been reduced or are even absent. Ideally a food product contains only natural ingredients, which are recognisable for the consumer, and which are considered to be artisanal or traditionally present in such food products. For example, the consumer generally does not like additives like preservatives, or colourants, therefore such compounds ideally should not be present in food products. Another example of such ingredients are chemically modified starches used as thickener and stabiliser, for example in reduced fat mayonnaises. These modified starches have excellent properties from technical viewpoint, but have a negative image as an artificial food ingredient. Therefore food industry has a strong drive to prepare food products which only contain natural ingredients.

Another driver for consumers is to reduce their fat intake, without compromising on the type of food products that they consume and without loss of quality compared to full fat variants. Hence, reduced fat mayonnaises and dressings have been a success on the market. These products generally contain thickeners like starches or flours to stabilise the aqueous phase and provide sufficient body to these products.

WO 2007/060174 relates to a viscous or gelled oil-in-water emulsion in which the dispersed oil droplets exhibit a self-assembled internal structure.

EP 0 792 587 A1 relates to a method for the manufacture of viscous and pourable dressings having reduced fat content, and which are produced without the use of starch or gums. The emulsions contain inulin instead.

US 5,538,751 relates to a thickened foodstuff, like a sauce, which contains a non-pre-gelatinised amylose polymer containing component, and a second biopolymer selected from the group consisting of a sheared amylopectin component, iota carrageenan, kappa carrageenan, xanthan, maltodextrins, pectins, alginates, guar gum, agar, gum arabic, locust bean gum, carboxymethyl cellulose, hydroxymethyl cellulose and mixtures thereof; wherein the amylose polymer containing component is present as a dispersed phase.

WO 95/04082 relates to thermally-inhibited non-pregelatinized granular starches and flours and process for their preparation. As defined herein, 'heat-treated starch' can be used to replace a chemically crosslinked or modified starch. These starches can be used in emulsions like salad dressings and mayonnaise.

### SUMMARY OF THE INVENTION

The consumer is interested in mayonnaises and dressings which have a low fat content, and which contain natural thickeners and stabilisers. Nevertheless, the oil-in-water emulsions should be stable during storage and shelf-life, meaning for example that the compositions should not expel water due to syneresis, or should not show creaming of oil droplets, as the oil droplets are not well emulsified.

We have now found that stable oil-in-water emulsions can be prepared by using wheat flour and physically modified starch as stabilisers in the emulsion. Wheat flour is an ingredient which is abundantly available, and which the consumer recognises and perceives as natural. Physically modified starches have undergone a mild heating step with water or steam. These physically modified starches have not been enzymatically modified by treating with one or more enzymes. Moreover they have not been chemically modified by reacting with molecules which have been added to the starch in order to form new covalent bonds between those molecules and the starch molecules. Therefore the consumer will regard this combination of water structurants to be natural compounds, and will prefer these ingredients over other ingredients which can be regarded to be artificial.

This combination of wheat flour and physically modified starch leads to physically stable oil-in-water emulsions, with strongly reduced, or even eliminated syneresis. Importantly, in spite of the presence of starches in the emulsions, the emulsions are not sticky, because breakdown of the emulsion in the mouth can be effectively controlled by the specific combination of flours and/or starch of the invention.

Accordingly in a first aspect the invention provides a composition in the form of an oil-in-water emulsion having a pH ranging from 3 to 5, comprising:
a) from 15% to 70% by weight of oil;
b) from 0.1% to 10% by weight of acid;
c) from 0.1% to 10% by weight of an oil-in-water emulsifier;
d) from 0.5% to 8% by weight of wheat flour, and
e) from 0.5% to 7% by weight of physically modified starch.

In a second aspect the invention provides a method for preparation of a composition according to the first aspect of the invention, comprising the steps:
a) mixing water and wheat flour and physically modified starch at a temperature below 65°C;
b) heating the mixture from step a) from a temperature below 65°C to a temperature ranging from 75°C to 95°C, and keeping the mixture within that temperature range during a time period of at least 2 minutes;
c) adding an acid to the mixture of step b), to a pH ranging from 3 to 5,
d) adding oil to the mixture from step c) and dispersing the oil in the mixture;
e) optionally homogenising the mixture of step d) to create an oil-in-water emulsion wherein the oil droplets have a surface weighted mean diameter D3,2 of less than 10 micrometer.

Alternatively, in a second aspect the invention provides a method for preparation of a composition according to the first aspect of the invention, comprising the steps:
a) mixing water and wheat flour at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
b) mixing water and physically modified starch at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
c) mixing the mixtures from steps a) and b) and optionally cooling the mixture to a temperature below 70°C;
d) adding an acid to the mixture of step c), to a pH ranging from 3 to 5,
e) adding oil to the mixture from step d) and dispersing the oil in the mixture;
f) optionally homogenising the mixture of step e) to create an oil-in-water emulsion wherein the oil droplets have a surface weighted mean diameter D3,2 of less than 10 micrometer.

In a third aspect the invention provides use of wheat starch and physically modified starch to reduce syneresis in a composition in the form of an oil-in-water emulsion, and wherein the oil-in-water emulsion comprises:
a) from 15% to 70% by weight of oil;
b) from 0.1% to 10% by weight of acid;
c) from 0.1% to 10% by weight of an oil-in-water emulsifier;
d) from 0.5% to 8% by weight of wheat flour, and
e) from 0.5% to 7% by weight of physically modified starch.

### DETAILED DESCRIPTION OF THE INVENTION

All percentages, unless otherwise stated, refer to the percentage by weight (wt%). D3,2 is the surface weighted mean diameter of a set of droplets or particles (M. Alderliesten, Particle & Particle Systems Characterization 8 (1991) 237-241).

**'Spoonable'** means that a composition is semi-solid but not free-flowing on a time scale typical for eating a meal, meaning not free-flowing within a time period of an hour. A sample of such substance is able to be dipped with a spoon from a container containing the composition.
**'Pourable'** is understood to mean that a composition is free-flowing; generally a spoon is not required to take a sample from a container containing a pourable composition.

**"Physically modified starch"** means a starch which has been subjected to a heat treatment in the presence of relatively small amounts of water or moisture. No other reagents are added to the starch during the heat treatment. The heat-treatment processes include heat-moisture and annealing treatments, both of which cause a physical modification of starch without any gelatinization, damage to granular integrity, or loss of birefringence (Miyazaki et al., Trends in Food Science & Technology 17 (2006) p.591-599). Annealing represents 'physical modification of starch slurries in water at temperatures below gelatinisation' whereas heat-moisture treatment 'refers to the exposure of starch to higher temperatures at very restricted moisture content (18-27%)'. (Tester et al., International Journal of Biological Macromolecules 27(2000) p.1-12). Physical modification should be distinguished from gelatinisation of starch, which usually is carried out by heating starch in an excess amount of water. Other terms which are used for this type of starch are "heat-treated starch" and "heat-modified starch".

**"Enzymatically modified starch"** means a starch which has been treated with one or more enzymes to modify its properties.

**"Chemically modified starch"** means a starch which has been reacted with reagents which have been added to the starch in order to form new covalent bonds between those molecules and the starch molecules.

Except in the operating and comparative examples, or where otherwise explicitly indicated, all numbers in this description indicating amounts or ratios of material or conditions of reaction, physical properties of materials and/or use are to be understood as modified by the word 'about'.

Mayonnaise is generally known as a thick, creamy sauce that can be used as a condiment with other foods. Mayonnaise is a stable water-continuous emulsion of vegetable oil, egg yolk and either vinegar or lemon juice. In many countries the term mayonnaise may only be used in case the emulsion conforms to the 'standard of identity', which defines the composition of a mayonnaise. For example, the standard of identity may define a minimum oil level, and a minimum egg yolk amount. Also mayonnaise-like products having oil levels lower than defined in a standard of identity can be considered to be mayonnaises. These kind of products often contain thickeners like starch to stabilise the aqueous phase. Mayonnaise may vary in colour, and is generally white, cream-coloured, or pale yellow. The texture may range from of light creamy to thick, and generally mayonnaise is spoonable. In the context of the present invention 'mayonnaise' includes emulsions with oil levels ranging from 5% to 85% by weight of the product. Mayonnaises in the context of the present invention do not necessarily need to conform to a standard of identity in any country.

The term 'oil' as used herein refers to lipids selected from triglycerides, diglycerides, monoglycerides and combinations thereof. Preferably the oil in the context of this invention comprises at least 90 wt% of triglycerides, more preferably at least 95 wt%. Typically, 40 to 100 wt%, more preferably 50 to 100 wt% and most preferably 60 to 100 wt% of the fatty acids contained in the dispersed oil phase are unsaturated fatty acids. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils. The terms 'oil' and 'fat' may be used interchangeably herein, and should be regarded to be synonyms.

The term "native" means in the context of the present invention, that a flour or a starch has not been chemically modified, by mixing the flour or starch with a chemical compound with the intention to attach chemical groups to molecules in the protein or starch, or to crosslink such molecules, or similar chemical modifications which create new covalent bonds. The flour or starch neither has been enzymatically modified, meaning treated with enzyme in order to modify the chemical composition of the starch. "Native" may mean that the flour or starch has been heated, with or without water.

In a first aspect the invention provides a composition in the form of an oil-in-water emulsion having a pH ranging from 3 to 5, comprising:
a) from 15% to 70% by weight of oil;
b) from 0.1% to 10% by weight of acid;
c) from 0.1% to 10% by weight of an oil-in-water emulsifier;
d) from 0.5% to 8% by weight of wheat flour, and
e) from 0.5% to 7% by weight of physically modified starch.

Preferably the composition is an edible emulsion. Examples of oil-in-water emulsions encompassed by the present invention include mayonnaise, dressings, soups, sauces and drinks. Preferably, the oil-in-water emulsion is a mayonnaise or a dressing, most preferably a mayonnaise. Generally such a mayonnaise is spoonable. Preferably, the amount of oil ranges from 20% to 60% by weight, preferably from 30% to 55% by weight. Preferably the amount of oil ranges from 35 to 50% by weight of the composition. Preferably the composition of the invention is a low-fat mayonnaise.

The emulsions according to the present invention typically are pourable or spoonable as opposed to solid. In case the present emulsion is non-pourable, it is preferred that the consistency of the emulsion is such that it cannot be cut in two as the parts of the emulsion that have been divided by the cutting will confluence after the cutting.

The amount of acid ranges from 0.1% to 10% by weight of acid; such that the pH ranges from 3 to 5, preferably from 3 to 4.6, preferably from 3 to 4. Suitable acids are selected from acetic acid, citric acid, lactic acid, malic acid, phosphoric acid, hydrochloric acid, glucono-delta-lactone and combinations thereof. Preferably, the emulsions comprise acetic acid, citric acid or combinations thereof.

The composition of the invention comprises wheat flour. Such flour generally naturally contains about 70%-80% starch, about 11-12% protein, and about 1% lipids. Preferably the wheat flour contains starch at a concentration of at least 60% based on the dry weight of the flour, preferably at least 65% by weight. Preferably the amylose content of the starch ranges from 20% to 40% by dry weight of the starch, more preferred from 20% to 30%. Preferably the flour comprises protein at a concentration of maximally 20% based on the dry weight of the flour, preferably maximally 15% by weight. Preferably the flour comprises lipids at a concentration of maximally 5% based on the dry weight of the first flour, preferably maximally 3% by weight. The wheat flour preferably has been finely grinded to provide a flour which creates a smooth emulsion when used in the composition of the invention, and from which starch, and protein can be released. Preferably the particle size of the finely grinded wheat flour is less than 120 micrometer, more preferably the average particle size of the finely grinded first flour ranges from 10 to 60 micrometer. Preferably, the wheat flour contains less than 10 wt%, more preferably less than 5 wt% and most preferably less than 1 wt% of particles having a hydrated diameter of 200 micrometer or more. The hydrated diameter of the finely ground pulse seed is suitably determined by means of Confocal Scanning Laser Microscopy, using the fluorescent dye Acridine Orange.

The composition of the invention comprises from 0.5% to 8% by weight of wheat flour. Preferably the composition of the invention comprises from 1% to 7% by weight of wheat flour, more preferred from 1% to 6.5% by weight, more preferred from 1.5% to 6% by weight. The wheat flour used in the present invention is capable of substantially improving the stability of the oil-in-water emulsion. The wheat flour preferably represents not more than 14%, preferably not more than 13%, preferably not more than 11% of the oil-in-water emulsion, calculated as dry matter by weight of the aqueous phase. Preferably, the wheat flour is employed in a concentration of at least 1%, even more preferably of at least 2% and most preferably of at least 3%, calculated as dry matter by weight of the aqueous phase.

Preferably the wheat flour is a native wheat flour. This flour preferably has not been chemically or enzymatically modified. Preferably the flour has not been physically modified before it is used for preparing the composition of the invention. When preparing the composition of the invention, the wheat flour is heated such that protein present in the wheat flour may denature, and starch in the wheat flour may gelatinise.

The composition of the invention comprises from 0.5% to 7% by weight of physically modified starch. Preferably the composition of the invention comprises from 0.5% to 6% by weight, preferably from 0.5% to 5% by weight, more preferred from 0.5% to 4.5% by weight of physically modified starch, more preferred from 0.7% to 4% by weight. The physically modified starch used in the present invention is capable of substantially improving the stability of the oil-in-water emulsion. Accordingly, the physically modified starch preferably represents not more than 10%, preferably not more than 9%, preferably not more than 8%, more preferably not more than 7%, of the oil-in-water emulsion, calculated as dry matter by weight of the aqueous phase. Preferably, the physically modified starch is employed in a concentration of at least 0.5%, even more preferably of at least 1% and most preferably of at least 1.5%, calculated as dry matter by weight of the aqueous phase.

Preferably the combined amount of wheat flour and physically modified starch ranges from 1% to 12% by weight of the composition, preferably from 1.5% to 11% by weight, more preferred from 2.2% to 10% by weight, more preferred from 3% to 6% by weight.

The combined amount of wheat flour and physically modified starch preferably represents not more than 16%, preferably note more than 15%, preferably not more than 12%, of the oil-in-water emulsion, calculated as dry matter by weight of the aqueous phase. Preferably the combined amount of wheat flour and physically modified starch is at least 3%, even more preferably of at least 4% and most preferably of at least 5%, calculated as dry matter by weight of the aqueous phase.

Preferably the weight ratio between the physically modified starch and the wheat flour ranges from 5:1 to 1:10, preferably from 3:1 to 1:5.

The physically modified starch preferably is not pre-gelatinised, meaning that the physically modified starch preferably requires to be cooked-up before it can be used to prepare the emulsion of the invention.

Preferably the physically modified starch has been obtained by drying native starch to a relative humidity of less than 3%, and subsequently heating the starch at a temperature ranging from 150°C to 200°C during a time period of at least 30 minutes. Preferably the physically modified starch is a starch as described in WO 95/04082.

Preferably the pH of the native starch before the starch is dried is at its natural pH and does not require adjustment. Alternatively, the pH of the native starch before drying is adjusted to a pH which is neutral or basic. Preferably, the pH of the native starch before drying ranges from 7 to 12, preferably from 7.5 to 12, preferably from 8.0 to 10.5. Native starch may be slightly acidic to neutral, and in such case adjustment of the pH preferably is done to a pH within the preferred range. Adjustment of the pH preferably is performed with food-grade bases selected from sodium hydroxide, sodium carbonate, tetrasodium pyrophosphate, ammonium orthophosphate, disodium orthophosphate, trisodium phosphate, calcium carbonate, calcium hydroxide, potassium carbonate, and potassium hydroxide, or any mixture of these bases.

The drying of the starch to the desired moisture level preferably is done simultaneously with the heating of the starch to the required heating temperature. Such heating from ambient temperature to the required heating temperature may be done within a time period ranging up to 5 hours, preferably less than 3 hours. The heating preferably is done at a temperature ranging from 150°C to 190°C, preferably from 160°C to 180°C. The heating time at the required temperature preferably ranges from 30 minutes to 6 hours, preferably from 30 minutes to 4 hours, preferably from 1 to 3 hours, preferably maximally 2 hours.

Preferably the physically modified starch comprises physically modified waxy corn starch. Suitable physically modified starches for use in the composition in the invention are Novation Prima 300, and Novation Endura 0100, both ex Ingredion Inc. (Westchester, IL, USA).

The composition of the invention comprises from 0.1% to 10% by weight of an oil-in-water emulsifier. Preferably the emulsifier originates from egg or egg components. Consumers may like the presence of egg or egg components, because of the taste. Additionally the presence of egg yolk may be beneficial for emulsification and/or stability of the oil droplets. Egg yolk contains phospholipids, which act as emulsifier for the oil droplets. Preferably the composition comprises from 0.5% to 10% by weight of egg yolk. Preferably the concentration of egg yolk in the composition ranges from 1% to 8% by weight of the emulsion, more preferred from 2% to 6% by weight of the emulsion. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.05% to 1% by weight, preferably from 0.1% to 0.8% by weight of the emulsion.

The egg yolk may be used native, or part of the egg yolk in the composition of the invention may have been subjected to an enzymatic conversion process using phospholipase. Preferably the phospholipase that is used to treat egg yolk is phospholipase A2. This process leads to split off of fatty acid chains from the phospholipid molecules, and yields so-called enzyme-modified egg yolk. The reaction products of this enzymatic process are retained in the enzyme-modified egg yolk, meaning that the enzyme-modified egg yolk contains fatty acids split off from the phospholipids. The reaction products of a process with phospholipase A2 are mainly lysophosphatidylcholines (or lysolecithins) and fatty acids. The concentration of the phospholipids 1-lysophosphatidylcholine, 2-lysophosphatidylcholine, and lysophosphatidylethanolamine is increased as compared to the native egg yolk. By this hydrolysis, the emulsifying properties of the egg yolk can be tuned, while the egg yolk retains its organoleptic properties. A suitable source of enzyme modified egg yolk is 'Heat stabilised egg yolk (92-8)', supplied by Bouwhuis Enthoven (Raalte, the Netherlands). This sample contains 92% enzyme modified egg yolk and 8% NaCl.

In case egg yolk treated with phospholipase is used in the composition of the invention, then preferably at least 25% by weight of the egg yolk has been modified by treatment with a phospholipase, preferably with phospholipase A2. The advantage of the use of the enzyme modified egg yolk is that the thickness of the emulsion is increased, as compared to the use of native egg yolk. Preferably maximally 90% by weight of the egg yolk has been modified by treatment with phospholipase, preferably with phospholipase A2. Preferably the concentration of egg yolk that been modified by treatment with a phospholipase, preferably with phospholipase A2, ranges from 1% to 6% by weight. Preferably the concentration of egg yolk which has been modified by treatment with phospholipase, preferably with phospholipase A2, ranges from 0.5% to 4% by weight of the composition, preferably from 1% to 4% by weight of the composition. Preferably the total concentration of 1-lysophosphatidylcholine and 2-lysophosphatidylcholine ranges from 0.02% to 0.2% by weight of the emulsion.

The amounts of egg and egg yolk as specified herein are based on liquid egg yolk. In case dried egg yolk is used, the amount of egg or egg yolk is reduced corresponding to the amount of water removed from the egg or egg yolk when drying the egg or egg yolk.

Instead of egg or egg components the emulsifier may comprise lecithin (from other sources than egg), monoglycerides, diglycerides, polyglycerol esters, or emulsifying starch like starch sodium octenyl succinate. Preferably though, the composition is free from other added isolated emulsifier than originating from egg to stabilise the oil droplets. With isolated emulsifier is meant that an emulsifier is added in isolated form to stabilise the oil droplets.

The compositions of the invention preferably comprise salt, preferably NaCl. Salt may aid the dissolution of proteins from the wheat flour, leading to better dispersion of the oil. If salt is added then preferably the concentration of salt ranges from 0.1% to 2% by weight of the composition, preferably from 0.5% to 1.8% by weight, preferably from 0.6% to 1.5% by weight. Preferably if salt is present, then the salt is added to an aqueous mixture containing physically modified starch, when such physically modified starch is cooked-up to gelatinise the starch (for example in step a) of the first method of the invention, and in step b) in the second method of the invention).

One of the advantages of using the combination of wheat flour and physically modified starch is that the composition of the present invention can be stabilised very effectively. Addition of a chemically or enzymatically modified starch prior to preparing the emulsion or after preparing the emulsion is not required. Hence, in a preferred embodiment, the composition contains no chemically or enzymatically modified starch, or only at a low concentration. Preferably the concentration of a chemically or enzymatically modified starch is maximally 0.5% by weight of the product, more preferred maximally 0.1% by weight, and most preferred chemically or enzymatically modified starch is absent from the composition.

Preferably the composition further comprises high methoxyl pectin, preferably at a concentration ranging from 0.05 to 0.5% by weight of the composition. The concentration of high methoxyl pectin preferably ranges from 0.1 to 0.4%, more preferred from 0.15 to 0.3% by weight of the composition. Preferably the high methoxyl pectin has a degree of esterification (DE) ranging from 60 to 80. The source of the pectin preferably is Grindsted Pectin AMD781, ex DuPont Danisco (Copenhagen, Denmark).

Additionally, other conventional water structuring agents are not required, or only at a low concentration. Preferably the concentration of other added conventional water structuring agents is maximally 0.5% by weight of the product, more preferred maximally 0.1% by weight, and most preferred other added water structuring agents are absent from the composition. Consequently, most preferred the emulsion contains no added water structuring agent selected from cellulose, modified cellulose, xanthan gum, agar, gelatin, carrageenan (iota, kappa, lambda), gellan, galactomannans (guar, tara, cassia, locust bean gum), konjac glucomannan, gum arabic, alginate and chitosan. Nevertheless the composition of the invention may contain hydrocolloids in case they originate from the wheat flour or the physically modified starch.

Preferably the oil droplets dispersed in the composition of the invention have a surface weighted mean diameter D3,2 of less than 10 micrometer, preferably from 0.3 to less than 10 micrometer, preferably from 0.5 to 8 micrometer, preferably less than 6 micrometer. This mean diameter may suitably be determined using the method described by Goudappel et al. (Journal of Colloid and Interface Science 239, p. 535-542, 2001). Typically, 80 to 100% of the total volume of the oil droplets contained in the composition of the invention have a diameter of less than 15 micrometer, more preferably a diameter ranging from 0.5 to 10 micrometer.

The combination of ingredients in the composition of the invention has a very significant effect on the rheological properties of the present emulsion, e.g. in that it provides an elastic modulus G', measured at 20°C, within the range of 100 to 1,000 Pa, most preferably in the range of 300 to 700 Pa at a strain (deformation) of 1%.

The dynamic viscosity of the present emulsion preferably ranges from 0.5 to 30 Pa.s, more preferably from 1 to 10 Pa.s at a shear rate of 50 s⁻¹ and 20°C. The viscosity can be determined using an AR1000 controlled stress rheometer ex TA Instruments (New Castle, DE, USA).

Preferably the composition has a Stevens value at 20°C of maximally 300 gram, preferably maximally 200 gram. Preferably the emulsion has a Stevens value at 20°C of at least 80 gram, preferably at least 90 gram, preferably ranging from 100 to 200 gram. More preferably the emulsion has a Stevens value at 20°C ranging from 100 to 150 gram. The Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises square openings of approximately 3x3 mm, is made up of wire with a thickness of approximately 1 mm, and has a diameter of 40 mm. Preferably the grid comprises square openings of 3x3 mm, is made up of wire with a thickness of 1 mm, and has a diameter of 40 mm. This methodology is further described in the experimental section.

The edible emulsion may suitably contain one or more additional ingredients besides water, oil, acid, emulsifier, wheat flour, and physically modified starch, and ingredients that have been mentioned herein before. Examples of such optional ingredients include spices, vitamins, flavouring, colouring, mustard, preservatives, antioxidants, chelators, herbs and pieces of meat, vegetable or cheese. Such optional additives, when used, collectively, do not make up more than 40%, more preferably not more than 20% by weight of the composition.

Advantages of the composition of the invention are that the composition is very stable upon storage, and shows only low syneresis values upon storage. Moreover, the breakdown of the emulsion in the mouth upon consumption is very similar to the breakdown of a full-fat mayonnaise containing about 75% oil and no thickeners. Moreover the gloss of the composition of the invention is similar to a full-fat mayonnaise without thickeners.

### Method for preparation of the composition of the invention

In a second aspect the invention provides a method for preparation of a composition according to the first aspect of the invention, comprising the steps:
a) mixing water and wheat flour and physically modified starch at a temperature below 65°C;
b) heating the mixture from step a) from a temperature below 65°C to a temperature ranging from 75°C to 95°C, and keeping the mixture within that temperature range during a time period of at least 2 minutes;
c) adding an acid to the mixture of step b), to a pH ranging from 3 to 5,
d) adding oil to the mixture from step c) and dispersing the oil in the mixture;
e) optionally homogenising the mixture of step d) to create an oil-in-water emulsion wherein the oil droplets have a surface weighted mean diameter D3,2 of less than 10 micrometer.

In step a) an aqueous dispersion is made of the wheat flour and the physically modified starch. The flours and starch are below the gelatinization temperature of the starches, and below the denaturation temperatures of the proteins. Preferably a homogeneous dispersion is prepared in step a). Preferably in step a) the temperature is below 60°C. The mixing of the flours, starch and water may be done at room temperature, and subsequently the temperature may be increased while agitating. This step is performed at the natural pH of the dispersion, no compounds need to be added in order to adjust the pH of the dispersion.

In step b) the dispersion is heated to a temperature above the gelatinisation temperature of the starches. This leads to the formation of a thickened aqueous dispersion. Preferably the mixture is agitated in step b) to prevent settling of starch granules. The temperature of the mixture as obtained from step a) is increased from a temperature below 65°C to a temperature ranging from 75°C to 95°C, preferably ranging from 85°C to 95°C.

In step b) the mixture from step a) is kept at a temperature ranging from 75°C to 95°C during a time period of at least 2 minutes, preferably at least 3 minutes. Preferably the mixture is maximally 10 minutes, preferably maximally 8 minutes, at a temperature ranging from 75°C to 95°C, preferably ranging from 85°C to 95°C.

After step b) the mixture may be cooled, preferably to a temperature between 60°C and 70°C, more preferred between 60°C and 65°C. Subsequently in step c) the acidulant is added to the aqueous mixture obtained from step b), and the mixture is acidified to a pH between 3 and 5. Preferably the acidulant is a food-grade acid. In this step c) preferably the oil-in-water emulsifier is added as well, in order to facilitate the dispersion of the oil which is added later.

Oil is added in step d). Preferably, in this step d) salt (preferably NaCl) is added. The salt may aid the dissolution of proteins from the wheat flour, leading to better dispersion of the oil. Preferably the oil is dispersed using a high shear mixer, in order to create small oil droplets, and disperse them evenly in the aqueous phase.

In case the oil dispersion is not fine enough, then optionally in step e) the dispersion obtained in step d) is further homogenised to create a fine dispersion of oil droplets. The optional homogenisation in step e) is done during a time period long enough that the dispersed oil phase typically has a volume weighted geometric mean diameter D3,2 of less than 10 micrometer, preferably from 0.3 to less than 10 micrometer, preferably from 0.5 to 8 micrometer. Preferably the oil droplets of the emulsion obtained in step e) have a volume weighted geometric mean droplet size D3,2 of less than 6 micrometer. The homogenisation may be done using a conventional mixer for preparing oil-in-water emulsions, such as a colloid mill, or another mill as described in WO 02/069737 A2. A suitable supplier of such emulsification equipment is Charles Ross & Son Company, (Hauppauge, New York, USA).

The optional homogenisation in step e) may be done using a conventional mixer for preparing oil-in-water emulsions, such as a colloid mill, or another mill as described in WO 02/069737 A2. A suitable supplier of such emulsification equipment is Charles Ross & Son Company (Hauppauge, New York, USA).

Preferably the ingredients in steps c) and d) are added to a mixture which is kept at a temperature ranging from 60°C to 70°C, preferably at a temperature ranging from 60°C to 65°C. Also optional process step e) is preferably done at a temperature ranging from 60°C to 70°C, preferably at a temperature ranging from 60°C to 65°C. The advantage of using these temperatures is that the mixtures can be homogenised, while the starches still exhibit their thickening properties.

Preferably, part of the mixture from step b) is added to the emulsion after the optional homogenisation step e), in order to create a composition having a viscosity and Stevens value which complies with the required specifications. Therefore preferably in step c) the acid is added to part of the mixture from step b), and subsequently the other steps are performed. Then preferably the other part of the mixture from step b) is mixed with the emulsion obtained from step d) or e) to prepare the composition of the invention.

An alternative process for making the composition of the invention is a process wherein the physically modified starch and the wheat flour are separately dispersed in water and heated. Therefore, in a second aspect the invention also provides a method for preparation of a composition according to the first aspect of the invention, comprising the steps:
a) mixing water and wheat flour at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
b) mixing water and physically modified starch at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
c) mixing the mixtures from steps a) and b) and optionally cooling the mixture to a temperature below 70°C;
d) adding an acid to the mixture of step c), to a pH ranging from 3 to 5,
e) adding oil to the mixture from step d) and dispersing the oil in the mixture;
f) optionally homogenising the mixture of step e) to create an oil-in-water emulsion wherein the oil droplets have a surface weighted mean diameter D3,2 of less than 10 micrometer.

In step a) an aqueous dispersion is made of the wheat flour. The flour is below the gelatinization temperature of the starch. Preferably a homogeneous dispersion is prepared in this step, preferably at a temperature below 60°C. The mixing of the flour and water may be done at room temperature, and subsequently the temperature may be increased while agitating. This step is performed at the natural pH of the dispersion, no compounds need to be added in order to adjust the pH of the dispersion.

In step b) an aqueous dispersion is made of the physically modified starch. The starch is below its gelatinization temperature. Preferably a homogeneous dispersion is prepared in this step, preferably at a temperature below 60°C. The mixing of the starch and water may be done at room temperature, and subsequently the temperature may be increased while agitating. This step is performed at the natural pH of the dispersion, no compounds need to be added in order to adjust the pH of the dispersion.

Steps a) and b) may be done simultaneously in two vessels, or in consecutive order, both a) followed by b), as well as b) followed by a) is possible.

The heating conditions in both steps a) and b) are that each dispersion is heated to a temperature above the gelatinisation temperature of the starches. This leads to the formation of thickened aqueous dispersions. Preferably both mixtures are agitated to prevent settling of starch granules. The temperature of the mixtures in steps a) and b) is increased from a temperature below 65°C to a temperature ranging from 75°C to 95°C, preferably ranging from 85°C to 95°C. Preferably the temperature of the mixtures in steps a) and b) is increased from a temperature below 65°C to a temperature ranging from 75°C to 95°C, preferably ranging from 85°C to 95°C. Both mixtures are kept at a temperature ranging from 75°C to 95°C, preferably ranging from 85°C to 95°C, during a time period of at least 2 minutes, preferably at least 3 minutes, and preferably maximally 10 minutes, preferably maximally 8 minutes.

After the heating, both mixtures in steps a) and b) are preferably cooled to a temperature below 70°C, preferably to a temperature of at least 60°C and below 70°C, more preferred between 60°C and 65°C.

In step c) the mixtures from steps a) and b) are mixed, and preferably brought to a temperature below 70°C, preferably to a temperature of at least 60°C and below 70°C, more preferred between 60°C and 65°C.

After step c) the mixture may be cooled, preferably to a temperature between 60°C and 70°C, more preferred between 60°C and 65°C. Subsequently in step d) the acidulant is added to the aqueous mixture obtained from step c), and the mixture is acidified to a pH between 3 and 5. In this step d) preferably the oil-in-water emulsifier is added, in order to facilitate the dispersion of the oil which is added later.

Steps d), e), and f) in this process correspond to steps c), d), and e) of the first process described herein before. Any preferred features described in the context of that first process also applies to this second process, *mutatis mutandis.*

Preferably the ingredients in steps d) and e) are added to a mixture which is kept at a temperature ranging from 60°C to 70°C, preferably at a temperature ranging from 60°C to 65°C. Also optional process step f) is preferably done at a temperature ranging from 60°C to 70°C, preferably at a temperature ranging from 60°C to 65°C. The advantage of using these temperatures is that the mixtures can be homogenised, while the starches still exhibit their thickening properties.

Preferably, part of the mixture from step c) is added to the emulsion after the optional homogenisation step f), in order to create a composition having a viscosity and Stevens value which complies with the required specifications. Therefore preferably in step d) the acid is added to part of the mixture from step c), and subsequently the other steps are performed. Then preferably the other part of the mixture from step c) is mixed with the emulsion obtained from step e) or f) e)to prepare the composition of the invention.

Preferably in the final optional homogenisation step the homogenisation is performed using a colloid mill operating at a rotation rate ranging from 2,000 to 14,000 rpm. In such step the emulsion is pumped through the head of the colloid mill, to be contacted with the rotating elements of that head. The oil droplets are finely dispersed after such homogenisation step having the required size, and a homogeneous emulsion is obtained. The emulsion may be recirculated once or twice over the colloid mill head in order to create the required oil droplet size.

### Use of wheat flour and physically modified starch

In a third aspect the invention provides use of wheat starch and physically modified starch to reduce syneresis in a composition in the form of an oil-in-water emulsion, and wherein the oil-in-water emulsion comprises:
f) from 15% to 70% by weight of oil;
g) from 0.1% to 10% by weight of acid;
h) from 0.1% to 10% by weight of an oil-in-water emulsifier;
i) from 0.5% to 8% by weight of wheat flour, and
j) from 0.5% to 7% by weight of physically modified starch.

Preferred aspects indicated in the context of the first or second aspect of the invention are applicable to the third aspect of the invention, *mutatis mutandis.*

### DESCRIPTION OF FIGURES

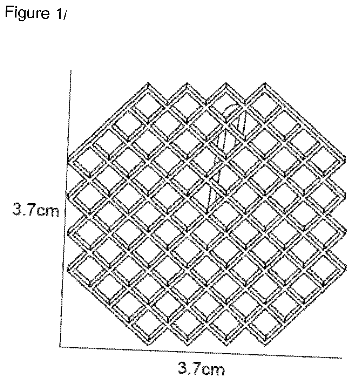

*Figure 1**:* Drawing of the stainless steel grid used for determining the Stevens value of oil-in-water emulsions as used herein. The grid has an outer size of about 3.7 cm by 3.7 cm. The grid contains 76 holes, each hole having a surface area of about 3x3 mm.

### EXAMPLES

The following examples illustrate the present invention.

### Raw materials

- Wheat flour: Wheat Flour T450 native undried <15%AN ex Saalemühle Alsleben GmbH (Alsleben, Germany)
- Physically modified starch: Physically modified waxy corn starch Novation Prima 300 ex Ingredion Inc. (Westchester, IL, USA).
- Sunflower oil ex Cargill (Amsterdam, The Netherlands).
- Egg yolk: enzyme modified liquid egg yolk (egg yolk treated with phospholipase A2, fragments are retained in the product); ex Bouwhuis Enthoven (Raalte, the Netherlands), contains 8% NaCl:
- Salt: NaCl suprasel ex Akzo Nobel (Amersfoort, Netherlands).
- Sugar: sucrose white sugar W4 ex Suiker Unie (Oud Gastel, Netherlands).
- Vinegar: 12% Branntweinessig ex Carl Kühne (Hamburg, Germany).
- EDTA: Dissolvine E-CA-10 - Calcium disodium EDTA ex Akzo Nobel (Amersfoort, Netherlands).
- Lactic acid: Lactic acid 80 ex (Corbion Purac, Gorinchem, Netherlands).
- Vinegar: 12% Branntweinessig ex Carl Kühne (Hamburg, Germany).
- Lemon juice: concentrate 45°brix ex Döhler (Darmstadt, Germany).
- Beta-carotene: 30% FS ex (DSM, Heerlen, Netherlands).
- HM pectin: Grindsted Pectin AMD781 ex DuPont Danisco (Copenhagen, Denmark).

### Methods

*Thickness* - *Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises square openings of approximately 3x3 mm, is made up of wire with a thickness of approximately 1 mm, and has a diameter of 40 mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded and translated into the Stevens value in gram. A drawing of the grid is given in Figure 1. The grid is made from stainless steel, and has 76 holes, each hole having a surface area of approximately 3x3 mm. The data presented in Table 3 are the average of duplicate measurements.

*Syneresis:* Syneresis in an oil-in-water emulsion is the expelling of aqueous liquid, which separates from the product during storage after disrupting the structure by e.g. spooning. In this test gravimetric drip of expelled water from an oil-in-water emulsion into an acrylic cylinder is determined during a storage period at various climate conditions.
Materials: Acrylic cylinder (length 45 mm, inner diameter 21 mm, wall thickness 2 mm, open at two ends) and qualitative filter paper, type 415, diameter 75mm (ex VWR, Amsterdam, Netherlands). The filter is applied at one end of the cylinder and attached to the outside cylinder wall by adhesive tape. The tube with filter is vertically inserted into an emulsion sample of 225 mL in a jar, until the top of the cylinder is at level with the emulsion surface. The jar is closed with a lid, and stored at 5°C or 20°C. The amount of liquid in the tube after storage is determined by taking out the liquid from the tube (which has passed through the filter into the tube) with a pipette, and weighing the amount of liquid (in gram) after a determined amount of time. The lower the syneresis value, the better the stability of the emulsion. The data presented in here are the averages of duplicate measurements.

### Oil droplet size measurement

The oil droplet size is determined using a Mastersizer 2000 E (ex Malvern Instruments Ltd., Malvern, UK) with accessory Hydro 2000 S (sample dispersion unit for aqueous suspensions). This device uses a method based on laser diffraction. The average droplet size is expressed as the D3,2, which is the surface weighted mean diameter of a set of droplets.

### Rheology measurements

Dynamic viscosity of emulsions is determined by using an AR1000 controlled stress rheometer ex TA Instruments (New Castle, DE, USA), operated at 50 s⁻¹ and 20°C. During 1 minute an emulsion is subjected to a constant shear rate of 50 s⁻¹. Every 10 seconds a measurement is made, and the measurement after 30 seconds is taken as the viscosity value and reported. Each product is measured at least twice.

Elastic modulus G' is determined using the same rheometer. Oscillatory measurements are performed at 20°C using a stainless steel cone-plate geometry (cone: 4 cm/2° and a truncation of 71 micrometer) at a frequency of 1 Hz in the stress interval from 0.01 Pa to 100 Pa (stress sweep). Each product to be measured at least twice. The G' value is presented at 1% strain (1% deformation).

### Equipment

- Mixed vessel: temperature controlled mixed vessel (Universal Machine UM-5, ex Stephan Machinery GmbH, Hameln, Germany);
- Colloid mill: MZMNK-7 (Fryma-Maschinen AG, Rheinfelden, Switzerland).

### Example 1. Preparation of Oil-In-Water Emulsions - Different Processes

In this example five oil-in-water emulsions were prepared, each having the same overall composition, nevertheless prepared using different processes, as specified below. The overall composition of the five emulsions is provided in Table 1.

**Table 1 Composition of prepared oil-in-water emulsions.**

| | **314** | **315** | **316** | **317** | **318** |
|---|---|---|---|---|---|
| *Ingredient* | *Conc. [wt%]* | *Conc. [wt%]* | *Conc. [wt%]* | *Conc. [wt%]* | *Conc. [wt%]* |
| Sunflower oil | 49.4 | 49.4 | 49.4 | 49.4 | 49.4 |
| Water | 38.8 | 38.8 | 38.8 | 38.8 | 38.8 |
| Egg yolk | 3.8 | 3.8 | 3.8 | 3.8 | 3.8 |
| Sugar | 2.4 | 2.4 | 2.4 | 2.4 | 2.4 |
| Wheat Flour | 2.0 | 2.0 | 2.0 | 2.0 | 2.0 |
| Physically modified starch | 1.3 | 1.3 | 1.3 | 1.3 | 1.3 |
| Vinegar | 1.3 | 1.3 | 1.3 | 1.3 | 1.3 |
| Salt | 0.9 | 0.9 | 0.9 | 0.9 | 0.9 |
| Lactic acid | 0.1 | 0.1 | 0.1 | 0.1 | 0.1 |
| Flavour | 0.1 | 0.1 | 0.1 | 0.1 | 0.1 |
| EDTA | 0.008 | 0.008 | 0.008 | 0.008 | 0.008 |
| Beta-carotene | 0.005 | 0.005 | 0.005 | 0.005 | 0.005 |
| *Total ** | *100.0* | *100.0* | *100.0* | *100.0* | *100.0* |

| | | | | | |
|---|---|---|---|---|---|
| * small differences may occur due to rounding of the numbers; in all tables in this specification | | | | | |

The emulsions are prepared by combining various phases, of which the composition is given in Table 2 for each of the emulsions.

**Table 2 Detailed composition of oil-in-water emulsions from Table 1, relative amount of the phases in the recipes, and composition (in wt%) of each phase.**

| | **314** | **315** | **316** | **317** | **318** |
|---|---|---|---|---|---|
| **Phase** | *Conc. [wt%]* | *Conc. [wt%]* | *Conc. [wt%]* | *Conc. [wt%]* | *Conc. [wt%]* |
| Water Phase | 2.1 | 2.1 | 2.1 | 2.1 | 2.1 |
| Wheat Flour Phase | 2.0 | 2.0 | 25.2 | 25.2 | 0.0 |
| Egg Phase | 3.8 | 3.8 | 3.8 | 3.8 | 3.8 |
| Oil Phase | 49.5 | 49.5 | 49.5 | 49.5 | 49.5 |
| Starch Phase | 42.6 | 42.6 | 19.4 | 19.4 | 44.6 |

| **Water Phase** | | | | | |
|---|---|---|---|---|---|
| Water | 1.1 | 1.1 | 1.1 | 1.1 | 1.1 |
| Salt | 0.1 | 0.1 | 0.1 | 0.1 | 0.1 |
| Vinegar | 0.8 | 0.8 | 0.8 | 0.8 | 0.8 |
| Lactic acid | 0.1 | 0.1 | 0.1 | 0.1 | 0.1 |

| **Wheat Flour Phase** | | | | | |
|---|---|---|---|---|---|
| Wheat Flour | 2.0 | 2.0 | 2.0 | 2.0 | 0 |
| Water | 0.0 | 0.0 | 23.2 | 23.2 | 0 |

| **Egg phase** | | | | | |
|---|---|---|---|---|---|
| Egg yolk | 3.8 | 3.8 | 3.8 | 3.8 | 3.8 |

| **Oil Phase** | | | | | |
|---|---|---|---|---|---|
| Sunflower oil | 49.4 | 49.4 | 49.4 | 49.4 | 49.4 |
| Flavour | 0.1 | 0.1 | 0.1 | 0.1 | 0.1 |
| Beta-carotene | 0.005 | 0.005 | 0.005 | 0.005 | 0.005 |

| **Starch Phase** | | | | | |
|---|---|---|---|---|---|
| Physically modified starch | 1.3 | 1.3 | 1.3 | 1.3 | 1.3 |
| Water | 37.7 | 37.7 | 14.5 | 14.5 | 37.7 |
| EDTA | 0.008 | 0.008 | 0.008 | 0.008 | 0.008 |
| Sugar | 2.4 | 2.4 | 2.4 | 2.4 | 2.4 |
| Vinegar | 0.5 | 0.5 | 0.5 | 0.5 | 0.5 |
| Salt | 0.8 | 0.8 | 0.8 | 0.8 | 0.8 |
| Wheat Flour | 0 | 0 | 0 | 0 | 2.0 |

The processes applied to prepare these emulsions are the following.

### Emulsion 314 (comparative)

1. Starch phase is heated in a mixed vessel, 5 min. at 90°C.
2. This heated mixture is subjected to shear by pumping it through a high pressure homogeniser, operated at 0 bar, and cooled to 45°C.
3. Wheat flour phase (dry) is added to the mix, and heated in a Stephan pan, 5 min. at 90°C, and cooled to 65°C.
4. Starch phase, water phase, and egg phase are mixed using a colloid mill, and oil phase is added while recirculating.

### Emulsion 315 (comparative)

1. Starch phase is heated in a mixed vessel, 5 min. at 90°C, and cooled to 45°C.
2. Wheat flour (dry) is added to the mix and dispersed, and the complete mixture is heated in a Stephan pan, 5 min. at 90°C, and cooled to 65°C.
3. Starch phase, water phase, and egg phase are mixed using a colloid mill, and oil phase is added while recirculating.

### Emulsion 316

1. Starch phase (containing physically modified starch as the only starch source) is heated in a mixed vessel, 5 min. at 90°C, and cooled to 65°C.
2. Wheat flour phase is heated in a mixed vessel, 5 min. at 90°C, and cooled to 65°C.
3. Starch phase, wheat flour phase, water phase, and egg phase are mixed using a colloid mill, and oil phase is added while recirculating.

### Emulsion 317 (comparative)

1. Starch phase is heated in a mixed vessel, 5 min. at 90°C.
2. This heated mixture is subjected to shear by pumping it through a high pressure homogeniser, operated at 0 bar, and cooled to 65°C.
3. Wheat flour phase is heated in a mixed vessel, 5 min. at 90°C, and cooled to 65°C.
4. Starch phase, wheat flour phase, water phase, and egg phase are mixed using a colloid mill, and oil phase is added while recirculating.

### Emulsion 318

1. Starch phase (containing wheat flour and physically modified starch in this case) is heated in a mixed vessel, 5 min. at 90°C, and cooled to 65°C.
2. Starch phase, water phase, and egg phase are mixed using a colloid mill, and oil phase is added while recirculating.

The Stevens values (for consistency of the emulsions) at 20°C and the syneresis values (for stability of the emulsions) at 5°C and 20°C were measured up to a storage time of 12 weeks (for syneresis) and 16 weeks (for Stevens). The results are given in the following Table 3:

**Table 3 Stevens value and syneresis value for emulsions from Table 1 as function of time (in weeks).**

| | 0wk | 1wk | 2wk | 4wk | 6wk | 8wk | 10wk | 12wk | 16wk |
|---|---|---|---|---|---|---|---|---|---|
| **Emulsion 314** (comparative) | | | | | | | | | |
| Stevens 20°C [g] | 65 | 68 | | 70 | | 71 | | | 80 |
| Syneresis 5°C [g] | 0 | 0.9 | 2.2 | 5.5 | 6.4 | 7.8 | 8 | 8.1 | |
| Syneresis 20°C [g] | 0 | 1.5 | 3 | 5.5 | 6.8 | 7.5 | 8.5 | 8.5 | |

| **Emulsion 315** (comparative) | | | | | | | | | |
|---|---|---|---|---|---|---|---|---|---|
| Stevens 20°C [g] | 75 | 75 | | 72 | | 70 | | | 80 |
| Syneresis 5°C [g] | 0 | 0 | 0.3 | 1 | 1.8 | 2.2 | 2.7 | 3 | |
| Syneresis 20°C [g] | 0 | 0 | 0.5 | 1.2 | 1.5 | 2 | 2.3 | 3 | |

| **Emulsion 316** | | | | | | | | | |
|---|---|---|---|---|---|---|---|---|---|
| Stevens 20°C [g] | 95 | 100 | | 97 | | 109 | | | 126 |
| Syneresis 5°C [g] | 0 | 0 | 0 | 0.2 | 0.2 | 0.5 | 0.5 | 0.5 | |
| Syneresis 20°C [g] | 0 | 0 | 0 | 0 | 0 | 0.2 | 0.3 | 0.3 | |

| **Emulsion 317** (comparative) | | | | | | | | | |
|---|---|---|---|---|---|---|---|---|---|
| Stevens 20°C [g] | 56 | 75 | | 63 | | 61 | | | 63 |
| Syneresis 5°C [g] | 0 | 0 | 0 | 0.5 | 0.8 | 1.1 | 1.5 | 1.8 | |
| Syneresis 20°C [g] | 0 | 0 | 0.3 | 1.1 | 0.9 | 1.5 | 2 | 2.5 | |

| **Emulsion 318** | | | | | | | | | |
|---|---|---|---|---|---|---|---|---|---|
| Stevens 20°C [g] | 70 | 75 | | 75 | | 79 | | | 90 |
| Syneresis 5°C [g] | 0 | 0 | 0.4 | 1.3 | 2.0 | 2.7 | 3.2 | 3.8 | |
| Syneresis 20°C [g] | 0 | 0.2 | 0.8 | 1.8 | 2.5 | 3.5 | 4 | 5 | |

This example shows that the emulsions prepared according to the methods of the invention (316 and 318) show good Stevens value, while that of the comparative compositions is lower. Emulsion 316 also has favourably low syneresis values. The syneresis of emulsion 318 is relatively high. Nevertheless we will see in example 2 that emulsion prepared according to the same process as this emulsion 318 have very low and thus favourable syneresis values.

The comparative examples are not stable upon storage during 12 weeks, as their syneresis values are relatively high. Moreover, their Stevens values are relatively low, meaning that their firmness is not high. Using the processes of the invention yields better structuring than the comparative examples.

### Example 2 - Emulsions containing various concentrations of wheat flour and physically modified starch

Oil-in-water emulsions were prepared having compositions as in the following table.

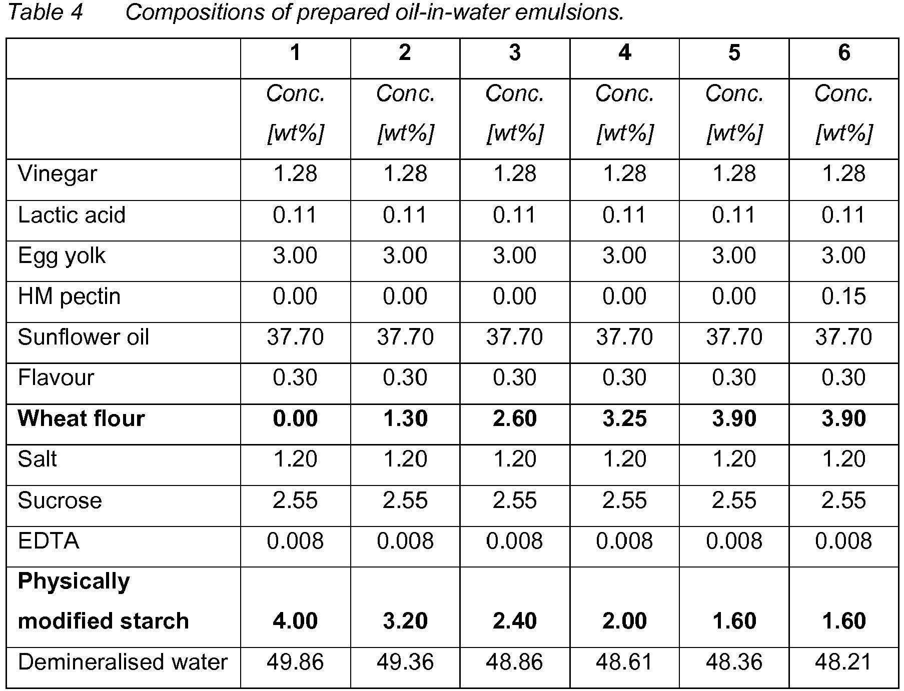

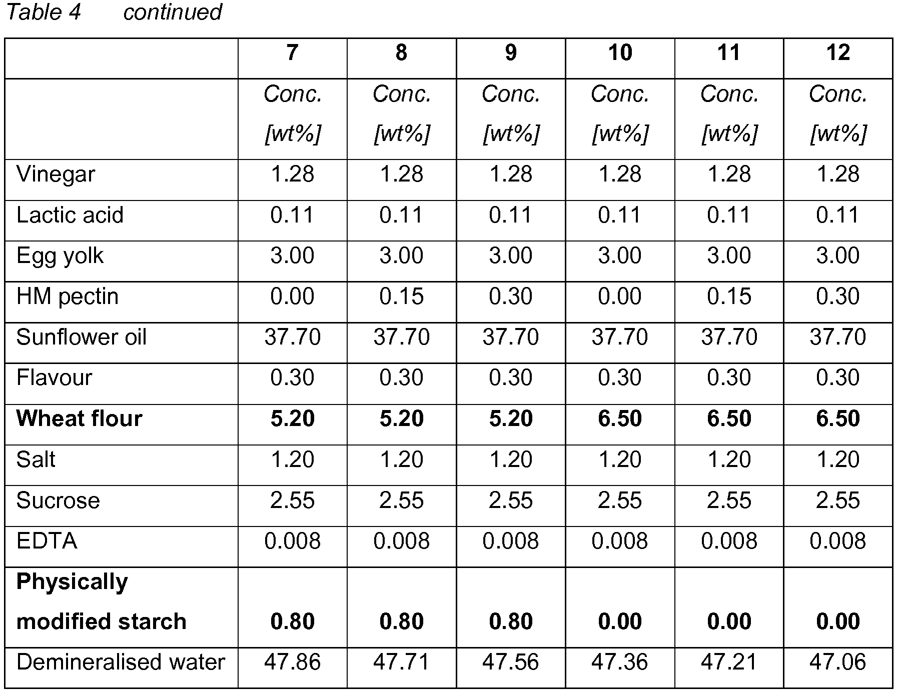

Each emulsion was prepared using the following process:
- A mixture was made of water, wheat flour, salt, sucrose, EDTA and physically modified starch in a mixed vessel at room temperature, and subsequently heated 5 min. at 90°C, and cooled to 65°C.
- This aqueous phase, acids, and egg yolk were mixed using a colloid mill, and oil phase (which includes flavour and optionally HM-pectin) was added while recirculating to prepare the oil-in-water emulsions.
This process is similar to the combined heating of the wheat flour and physically modified starch in emulsion 318 in example 1.

The Stevens values (for consistency of the emulsions) at 20°C and the syneresis values (for stability of the emulsions) at 5°C and 20°C were measured. The results are given in the following tables. Also the oil droplet diameter and rheological properties were determined. Samples containing only wheat flour (no physically modified starch) were not smooth, were regarded to be floury. The other emulsions had a good structure and stability.

**Table 5 Stevens value for emulsions from Table 4 as function of time.**

| *Emulsion* | *Stevens 15 min [g]* | *Stevens 7 days [g]* | *Stevens 30 days [g]* |
|---|---|---|---|
| 1 | 74 | 98 | 101 |
| 2 | 69 | 110 | 114 |
| 3 | 65 | 107 | 120 |
| 4 | 68 | 109 | 121 |
| 5 | 66 | 112 | 117 |
| 6 | 65 | 109 | 113 |
| 7 | 65 | 110 | 112 |
| 8 | 69 | 112 | 124 |
| 9 | 78 | 113 | 116 |
| 10 | 55 | 91 | 96 |
| 11 | 68 | 103 | 107 |
| 12 | 69 | 107 | 110 |

**Table 6 Syneresis value for emulsions from Table 4 as function of time at 20°C.**

| *Emulsion* | *1 wk (20°C)* | *2 wks (20°C)* | *4 wks (20°C)* | *6 wks (20°C)* | *8 wks (20°C)* | *10 wks (20°C)* | *12 wks (20°C)* |
|---|---|---|---|---|---|---|---|
| 1 | 0 | 0 | 0 | 0.0 | 0.1 | 0.1 | 0.13 |
| 2 | 0 | 0 | 0 | 0.1 | 0.1 | 0.2 | 0.25 |
| 3 | 0 | 0 | 0 | 0.1 | 0.2 | 0.3 | 0.32 |
| 4 | 0 | 0 | 0 | 0.1 | 0.2 | 0.2 | 0.32 |
| 5 | 0 | 0 | 0 | 0.1 | 0.1 | 0.3 | 0.35 |
| 6 | 0 | 0 | 0 | 0.0 | 0.1 | 0.1 | 0.09 |
| 7 | 0 | 0 | 0 | 0.1 | 0.2 | 0.3 | 0.45 |
| 8 | 0 | 0 | 0 | 0.0 | 0.0 | 0.1 | 0.05 |
| 9 | 0 | 0 | 0 | 0.0 | 0.0 | 0.0 | 0.00 |
| 10 | 0 | 0 | 0 | 0.0 | 0.1 | 0.1 | 0.16 |
| 11 | 0 | 0 | 0 | 0.0 | 0.0 | 0.0 | 0.03 |
| 12 | 0 | 0 | 0 | 0.0 | 0.0 | 0.0 | 0.00 |

**Table 7 Syneresis value for emulsions from Table 4 as function of time at 5°C.**

| *Emulsion* | *1 wk (5°C)* | *2 wks (5°C)* | *4 wks (5°C)* | *6 wks (5°C)* | *8 wks (5°C)* | *10 wks (5°C)* | *12 wks (5°C)* |
|---|---|---|---|---|---|---|---|
| 1 | 0 | 0 | 0 | 0.0 | 0.1 | 0.1 | 0.20 |
| 2 | 0 | 0 | 0 | 0.0 | 0.1 | 0.2 | 0.29 |
| 3 | 0 | 0 | 0 | 0.0 | 0.1 | 0.2 | 0.32 |
| 4 | 0 | 0 | 0 | 0.0 | 0.1 | 0.2 | 0.23 |
| 5 | 0 | 0 | 0 | 0.0 | 0.1 | 0.1 | 0.20 |
| 6 | 0 | 0 | 0 | 0.0 | 0.0 | 0.0 | 0.06 |
| 7 | 0 | 0 | 0 | 0.0 | 0.1 | 0.2 | 0.35 |
| 8 | 0 | 0 | 0 | 0.0 | 0.0 | 0.0 | 0.02 |
| 9 | 0 | 0 | 0 | 0.0 | 0.0 | 0.0 | 0.00 |
| 10 | 0 | 0 | 0 | 0.0 | 0.0 | 0.1 | 0.14 |
| 11 | 0 | 0 | 0 | 0.0 | 0.0 | 0.0 | 0.00 |
| 12 | 0 | 0 | 0 | 0.0 | 0.0 | 0.0 | 0.00 |

**Table 8 Mean oil droplet value D3,2, dynamic viscosity, and G' values for emulsions from Table 4.**

| *Emulsion* | *Droplet size D3,2 [µm]* | *Viscosity at 50 s⁻¹ [Pa.s]* | *G' at 1% strain [Pa]* |
|---|---|---|---|
| 1 | 4.26 | 2.62 | 451 |
| 2 | 4.49 | 2.43 | 472 |
| 3 | 4.38 | 2.55 | 558 |
| 4 | 4.21 | 2.52 | 547 |
| 5 | 4.21 | 2.47 | 495 |
| 6 | 4.27 | 2.79 | 519 |
| 7 | 4.44 | 2.63 | 574 |
| 8 | 4.33 | 3.08 | 566 |
| 9 | 5.52 | 3.83 | 563 |
| 10 | 6.11 | 2.82 | 411 |
| 11 | 4.66 | 3.36 | 465 |
| 12 | 4.66 | 3.32 | 503 |

The samples containing physically modified starch and wheat flour had a good stability with regard to syneresis. This was even further improved when high methoxyl pectin was present in these compositions (emulsions 6, 8, 9, 10, and 11).

## Claims

1. A composition in the form of an oil-in-water emulsion having a pH ranging from 3 to 5, comprising:
a) from 15% to 70% by weight of oil;
b) from 0.1% to 10% by weight of acid;
c) from 0.1% to 10% by weight of an oil-in-water emulsifier;
d) from 0.5% to 8% by weight of wheat flour, and
e) from 0.5% to 7% by weight of physically modified starch,
wherein the composition is obtainable by the method according to any one of claims 12 to 14.

2. A composition according to claim 1, wherein the composition is an edible emulsion, preferably a mayonnaise.

3. A composition according to claim 1 or 2, wherein the amount of oil ranges from 20% to 60% by weight, preferably from 30% to 55% by weight.

4. A composition according to any of claims 1 to 3, wherein the wheat flour is a native wheat flour.

5. A composition according to any of claims 1 to 4, wherein the physically modified starch has been obtained by drying native starch to a relative humidity of less than 3%, and subsequently heating the starch at a temperature ranging from 150°C to 200°C during a time period of at least 30 minutes.

6. A composition according to any of claims 1 to 5, wherein the physically modified starch comprises physically modified waxy corn starch.

7. A composition according to any of claims 1 to 6, wherein the composition comprises from 0.5% to 10% by weight of egg yolk.

8. A composition according to claim 7, wherein at least 25% by weight of the egg yolk has been modified by treatment with a phospholipase, preferably with phospholipase A2.

9. A composition according to claim 8, wherein the concentration of egg yolk that been modified by treatment with a phospholipase, preferably with phospholipase A2, ranges from 1% to 6% by weight.

10. A composition according to any of claims 1 to 9, further comprising high methoxyl pectin, preferably at a concentration ranging from 0.05 to 0.5% by weight of the composition.

11. A composition according to any of claims 1 to 10, wherein the oil droplets have a surface weighted mean diameter D3,2 of less than 10 micrometer.

12. A method for preparation of a composition according to any one of claims 1 to 11, comprising the steps:
a) mixing water and wheat flour and physically modified starch at a temperature below 65°C;
b) heating the mixture from step a) from a temperature below 65°C to a temperature ranging from 75°C to 95°C, and keeping the mixture within that temperature range during a time period of at least 2 minutes;
c) adding an acid to the mixture of step b), to a pH ranging from 3 to 5,
d) adding oil to the mixture from step c) and dispersing the oil in the mixture;
e) optionally homogenising the mixture of step d) to create an oil-in-water emulsion
wherein the oil droplets have a surface weighted mean diameter D3,2 of less than 10 micrometer.

13. A method for preparation of a composition according to any one of claims 1 to 11, comprising the steps:
a) mixing water and wheat flour at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
b) mixing water and physically modified starch at a temperature below 65°C, and heating the mixture to a temperature ranging from 75°C to 95°C, and keeping the mixture within that temperature range during a time period of at least 2 minutes; and optionally subsequently cooling the mixture to a temperature below 70°C;
c) mixing the mixtures from steps a) and b) and optionally cooling the mixture to a temperature below 70°C;
d) adding an acid to the mixture of step c), to a pH ranging from 3 to 5,
e) adding oil to the mixture from step d) and dispersing the oil in the mixture;
f) optionally homogenising the mixture of step e) to create an oil-in-water emulsion
wherein the oil droplets have a surface weighted mean diameter D3,2 of less than 10 micrometer.

14. A method according to claim 12 or 13, wherein in the final optional homogenisation step the homogenisation is performed using a colloid mill operating at a rotation rate ranging from 2,000 to 14,000 rpm.

15. Use of wheat starch and physically modified starch to reduce syneresis in a composition in the form of an oil-in-water emulsion, and wherein the oil-in-water emulsion comprises:
a) from 15% to 70% by weight of oil;
b) from 0.1% to 10% by weight of acid;
c) from 0.1% to 10% by weight of an oil-in-water emulsifier;
d) from 0.5% to 8% by weight of wheat flour, and
e) from 0.5% to 7% by weight of physically modified starch.

## Patentansprüche

1. Zusammensetzung in Form einer Öl-in-Wasser-Emulsion mit einem pH in dem Bereich von 3 bis 5, umfassend:
a) von 15 bis 70 Gewichts-% Öl;
b) von 0,1 bis 10 Gewichts-% Säure;
c) von 0,1 bis 10 Gewichts-% eines Öl-in-Wasser-Emulgators;
d) von 0,5 bis 8 Gewichts-% Weizenmehl und
e) von 0,5 bis 7 Gewichts-% physikalisch modifizierte Stärke,
wobei die Zusammensetzung durch das Verfahren nach irgendeinem der Ansprüche 12 bis 14 erhältlich ist.

2. Zusammensetzung nach Anspruch 1, wobei die Zusammensetzung eine essbare Emulsion, vorzugsweise eine Mayonnaise ist.

3. Zusammensetzung nach Anspruch 1 oder 2, wobei die Menge des Öls in dem Bereich von 20 bis 60 Gewichts-%, vorzugsweise von 30 bis 55 Gewichts-%, liegt.

4. Zusammensetzung nach irgendeinem der Ansprüche 1 bis 3, wobei das Weizenmehl ein natives Weizenmehl ist.

5. Zusammensetzung nach irgendeinem der Ansprüche 1 bis 4, wobei die physikalisch modifizierte Stärke durch Trocknen nativer Stärke bis auf eine relative Feuchtigkeit von weniger als 3% und anschließendes Erhitzen der Stärke auf eine Temperatur in dem Bereich von 150°C bis 200°C während einer Zeitdauer von mindestens 30 Minuten erhalten wurde.

6. Zusammensetzung nach irgendeinem der Ansprüche 1 bis 5, wobei die physikalisch modifizierte Stärke physikalisch modifizierte Wachsmaisstärke umfasst.

7. Zusammensetzung nach irgendeinem der Ansprüche 1 bis 6, wobei die Zusammensetzung von 0,5 bis 10 Gewichts-% Eigelb umfasst.

8. Zusammensetzung nach Anspruch 7, wobei mindestens 25 Gewichts-% des Eigelbs durch Behandlung mit einer Phospholipase, vorzugsweise mit Phospholipase A2, modifiziert worden sind.

9. Zusammensetzung nach Anspruch 8, wobei die Konzentration des Eigelbs, das durch die Behandlung mit einer Phospholipase, vorzugsweise mit Phospholipase A2, modifiziert worden ist, in dem Bereich von 1 bis 6 Gewichts-% liegt.

10. Zusammensetzung nach irgendeinem der Ansprüche 1 bis 9, die des Weiteren Pektin mit hohem Methoxyl-Gehalt umfasst, vorzugsweise in einer Konzentration in dem Bereich von 0,05 bis 0,5 Gewichts-% der Zusammensetzung.

11. Zusammensetzung nach irgendeinem der Ansprüche 1 bis 10, wobei die Öltröpfchen einen oberflächengewichteten mittleren Durchmesser D3,2 von weniger als 10 Mikrometer aufweisen.

12. Verfahren zur Herstellung einer Zusammensetzung nach irgendeinem der Ansprüche 1 bis 11, umfassend die Schritte:
a) Mischen von Wasser und Weizenmehl und physikalisch modifizierter Stärke bei einer Temperatur unter 65°C;
b) Erhitzen der Mischung vom Schritt a) von einer Temperatur unter 65°C auf eine Temperatur in dem Bereich von 75°C bis 95°C und Halten der Mischung innerhalb dieses Temperaturbereichs während einer Zeitdauer von mindestens 2 Minuten;
c) Zugeben einer Säure zu der Mischung vom Schritt b) auf einen pH in dem Bereich von 3 bis 5,
d) Zugeben von Öl zu der Mischung vom Schritt c) und Dispergieren des Öls in der Mischung;
e) optional Homogenisieren der Mischung vom Schritt d), um eine Öl-in-Wasser-Emulsion zu erzeugen, wobei die Öltröpfchen einen oberflächengewichteten mittleren Durchmesser D3,2 von weniger als 10 Mikrometer aufweisen.

13. Verfahren zur Herstellung einer Zusammensetzung nach irgendeinem der Ansprüche 1 bis 11, umfassend die Schritte:
a) Mischen von Wasser und Weizenmehl bei einer Temperatur unter 65°C und Erhitzen der Mischung auf eine Temperatur in dem Bereich von 75°C bis 95°C und Halten der Mischung innerhalb dieses Temperaturbereichs während einer Zeitdauer von mindestens 2 Minuten; und optional anschließendes Kühlen der Mischung auf eine Temperatur unter 70°C;
b) Mischen von Wasser und physikalisch modifizierter Stärke bei einer Temperatur unter 65°C und Erhitzen der Mischung auf eine Temperatur in dem Bereich von 75°C bis 95°C und Halten der Mischung innerhalb dieses Temperaturbereichs während einer Zeitdauer von mindestens 2 Minuten und optional anschließendes Kühlen der Mischung auf eine Temperatur unter 70°C;
c) Mischen der Mischungen von den Schritten a) und b) und optional Kühlen der Mischung auf eine Temperatur unter 70°C;
d) Zugeben einer Säure zu der Mischung vom Schritt c) auf einen pH in dem Bereich von 3 bis 5;
e) Zugeben von Öl zu der Mischung vom Schritt d) und Dispergieren des Öls in der Mischung;
f) optional Homogenisieren der Mischung vom Schritt e), um eine Öl-in-Wasser-Emulsion zu erzeugen, wobei die Öltröpfchen einen oberflächengewichteten mittleren Durchmesser D3,2 von weniger als 10 Mikrometer aufweisen.

14. Verfahren nach Anspruch 12 oder 13, wobei im abschließenden optionalen Homogenisierungsschritt die Homogenisierung unter Verwendung einer Kolloidmühle durchgeführt wird, die mit einer Rotationsgeschwindigkeit in dem Bereich von 2.000 bis 14.000 U/min betrieben wird.

15. Verwendung von Weizenstärke und physikalisch modifizierter Stärke, um die Synärese in einer Zusammensetzung in Form einer Öl-in-Wasser-Emulsion zu vermindern und wobei die Öl-in-Wasser-Emulsion umfasst:
a) von 15 bis 70 Gewichts-% Öl;
b) von 0,1 bis 10 Gewichts-% Säure;
c) von 0,1 bis 10 Gewichts-% eines Öl-in-Wasser-Emulgators;
d) von 0,5 bis 8 Gewichts-% Weizenmehl und
e) von 0,5 bis 7 Gewichts-% physikalisch modifizierte Stärke.

## Revendications

1. Composition dans la forme d'une émulsion huile-dans-eau présentant un pH de 3 à 5, comprenant :
a) de 15 % à 70 % en masse d'huile ;
b) de 0,1 % à 10 % en masse d'acide ;
c) de 0,1 % à 10 % en masse d'un émulsionnant huile-dans-eau ;
d) de 0,5 % à 8 % en masse de farine de blé, et
e) de 0,5 % à 7 % en masse d'amidon physiquement modifié,
dans laquelle la composition peut être obtenue par le procédé selon l'une quelconque des revendications 12 à 14.

2. Composition selon la revendication 1, dans laquelle la composition est une émulsion comestible, de préférence une mayonnaise.

3. Composition selon la revendication 1 ou 2, dans laquelle la quantité d'huile est de 20 % à 60 % en masse, de préférence de 30 % à 55 % en masse.

4. Composition selon l'une quelconque des revendications 1 à 3, dans laquelle la farine de blé est une farine de blé native.

5. Composition selon l'une quelconque des revendications 1 à 4, dans laquelle l'amidon physiquement modifié a été obtenu en séchant de l'amidon natif à une humidité relative inférieure à 3 %, et en chauffant ensuite l'amidon à une température de 150°C à 200°C sur une durée d'au moins 30 minutes

6. Composition selon l'une quelconque des revendications 1 à 5, dans laquelle l'amidon physiquement modifié comprend de l'amidon de maïs cireux physiquement modifié.

7. Composition selon l'une quelconque des revendications 1 à 6, dans laquelle la composition comprend de 0,5 % à 10 % en masse de jaune d'œuf.

8. Composition selon la revendication 7, dans laquelle au moins 25 % en masse du jaune d'œuf ont été modifiés par traitement avec une phospholipase, de préférence une phospholipase A2.

9. Composition selon la revendication 8, dans laquelle la concentration de jaune d'œuf qui a été modifié par traitement avec une phospholipase, de préférence une phospholipase A2, est de 1 % à 6 % en masse.

10. Composition selon l'une quelconque des revendications 1 à 9, comprenant de plus de la pectine à teneur élevée en méthoxyle, de préférence à une concentration de 0,05 à 0,5 % en masse de la composition.

11. Composition selon l'une quelconque des revendications 1 à 10, dans laquelle les gouttelettes d'huile présentent un diamètre moyen pondéré en surface D3,2 inférieur à 10 micromètres.

12. Procédé de préparation d'une composition selon l'une quelconque des revendications 1 à 11, comprenant les étapes de :
a) mélange d'eau et de farine de blé et d'amidon physiquement modifié à une température inférieure à 65°C ;
b) chauffage du mélange de l'étape a) à une température inférieure à 65°C jusqu'à une température de 75°C à 95°C, et maintien du mélange dans cet intervalle de température sur une durée d'au moins 2 minutes ;
c) addition d'un acide au mélange de l'étape b), jusqu'à un pH de 3 à 5,
d) addition d'huile au mélange de l'étape c) et dispersion de l'huile dans le mélange ;
e) éventuellement homogénéisation du mélange de l'étape d) pour créer une émulsion huile-dans-eau dans laquelle les gouttelettes d'huile présentent un diamètre moyen pondéré en surface D3,2 inférieur à 10 micromètres.

13. Procédé de préparation d'une composition selon l'une quelconque des revendications 1 à 11, comprenant les étapes de :
a) mélange d'eau et de farine de blé à une température inférieure à 65°C, et chauffage du mélange dans un intervalle de température de 75°C à 95°C, et maintien du mélange dans cet intervalle de température sur une durée d'au moins 2 minutes ; et éventuellement refroidissement subséquent du mélange à une température inférieure à 70°C ;
b) mélange d'eau et d'amidon physiquement modifié à une température inférieure à 65°C, et chauffage du mélange à une température de 75°C à 95°C, et maintien du mélange dans cet intervalle de température sur une durée d'au moins 2 minutes ; et éventuellement refroidissement subséquent du mélange à une température inférieure à 70°C ;
c) mélange des mélanges des étapes a) et b) et éventuellement refroidissement du mélange à une température inférieure à 70°C ;
d) addition d'un acide au mélange de l'étape c), jusqu'à un pH de 3 à 5,
e) addition d'huile au mélange de l'étape d) et dispersion de l'huile dans le mélange ;
f) éventuellement homogénéisation du mélange de l'étape e) pour créer une émulsion huile-dans-eau dans laquelle les gouttelettes d'huile présentent un diamètre moyen pondéré en surface D3,2 inférieur à 10 micromètres.

14. Procédé selon la revendication 12 ou 13, dans lequel dans l'étape d'homogénéisation éventuelle finale l'homogénéisation est réalisée en utilisant un broyeur de colloïde fonctionnant à une vitesse de rotation de 2 000 à 14 000 tr/min.

15. Utilisation d'amidon de blé et d'amidon physiquement modifié pour réduire la synérèse dans une composition dans la forme d'une émulsion huile-dans-eau, et dans laquelle l'émulsion huile-dans-eau comprend :
a) de 15 % à 70 % en masse d'huile ;
b) de 0,1 % à 10 % en masse d'acide ;
c) de 0,1 % à 10 % en masse d'un émulsionnant huile-dans-eau ;
d) de 0,5 % à 8 % en masse de farine de blé, et
e) de 0,5 % à 7 % en masse d'amidon physiquement modifié.
